Europäisches Patentamt

European Patent Office

Office européen des brevets

(19)

(11) Veröffentlichungsnummer: **0 104 313**
**A1**

## (12) EUROPÄISCHE PATENTANMELDUNG

(21) Anmeldenummer: 83104632.1

(22) Anmeldetag: 11.05.83

(51) Int. Cl.³: **G 10 L 1/06**

(30) Priorität: 28.09.82 DE 3235804

(43) Veröffentlichungstag der Anmeldung:
04.04.84 Patentblatt 84/14

(84) Benannte Vertragsstaaten:
FR GB NL

(71) Anmelder: ROBERT BOSCH GMBH
Postfach 50
D-7000 Stuttgart 1(DE)

(72) Erfinder: Pöpplau, Werner, Dipl.-Ing.
Schillerpromenade 14
D-1000 Berlin 44(DE)

(72) Erfinder: Urbanski, Wilfried, Dipl.-Ing.
Rehagener Strasse 2
D-1000 Berlin 49(DE)

(74) Vertreter: Schmidt, Hans-Ekhardt
Robert Bosch GmbH Geschäftsbereich Elektronik Patent-
und Lizenzabteilung Forckenbeckstrasse 9-13
D-1000 Berlin 33(DE)

(54) Verfahren und Schaltungsanordnung zur bandbreitenreduzierten Sprachübertragung.

(57) Es werden ein Verfahren und eine Schaltungsanordnung zur bandbreitenreduzierten Sprachübertragung vorgeschlagen, die zu einer besonders starken Reduzierung der erforderlichen Übertragungsbandbreite führen. Das Verfahren geht von einem Sprachfrequenzband (SF) aus, das in drei Frequenzbänder, nämlich ein unteres Frequenzband (FBU), ein mittleres Frequenzband (FBM) und eine oberes Frequenzband (FBO) aufgeteilt wird. Das untere Frequenzband kennzeichnet die Vokale der Sprache, das mittlere Frequenzband den unteren Frequenzbereich der Konsonanten und das obere Frequenzband den oberen Frequenzbereich der Konsonanten. Der mittlere Frequenzbereich wird von der Übertragung ausgeschlossen. Von dem oberen Frequenzband wird das Hüllkurvenfrequenzband (FBO') abgeleitet, das in einen Frequenzbereich umgesetzt wird, der dem unteren Frequenzband benachbart ist. Auf diese Weise wird bei einer analogen Signalübertragung anstelle des ursprünglichen Sprachfrequenzbandes (SF) nur ein um etwa zwei Drittel kleineres Frequenzband übertragen.

Fig.1

30/82
EK/PLI Scht/Li
27. 9. 1982

ROBERT BOSCH GMBH, 7000 Stuttgart 1

Verfahren und Schaltungsanordnung zur
bandbreitenreduzierten Sprachübertragung

Stand der Technik

Die Erfindung geht von einem Verfahren und einer Schaltungsanordnung zur bandbreitenreduzierten Sprachübertragung nach
der Gattung des Anspruchs 1 aus.

Es ist schon ein Verfahren zur bandbreitenreduzierten Sprachübertragung bekannt (DE-A1-30 32 699), bei dem ein Sprachfrequenzband (Fernsprechfrequenzband von 300 ... 3400 Hz)
in ein unteres Frequenzband (300 ... 800 Hz) und ein oberes
Frequenzband (2500 ... 3400 Hz) derart aufgeteilt wird, daß
in diesen Bändern jeweils nur eine sinusförmige Schwingung
auftritt, die in der Frequenz und Amplitude moduliert ist.
Aus dem unteren und dem oberen Frequenzband werden vier verschiedene Modulationssignale extrahiert, die anstelle der
Sprache weiterverarbeitet werden. Das bekannte Verfahren ist
verhältnismäßig aufwendig.

Vorteile der Erfindung

Das erfindungsgemäße Verfahren mit den kennzeichnenden Merkmalen des Anspruchs 1 hat den Vorteil, daß bei einer analogen
Sprachübertragung eine Bandbreitenverminderung mit relativ
niedrigem technischen Aufwand um bis zu zwei Drittel möglich
ist. Die durch die Bandbreitenverminderung freigewordene
Bandbreite kann entweder für eine weitere Sprachübertragung
mit reduzierter Bandbreite oder für eine digitale Datenübertragung ausgenutzt werden.

- 2 -

Durch die in den Unteransprüchen aufgeführten Maßnahmen
sind vorteilhafte Weiterbildungen und Verbesserungen des
im Anspruch 1 angegebenen Verfahrens möglich. Besonders
vorteilhaft ist ein Verfahren, bei dem die auszusendenden
Signale in eine digitale Form überführt und gegebenenfalls
kodiert oder verschlüsselt werden und bei dem empfangsseitig die digitalen Signale in analoge Signale zurückgewandelt und dekodiert bzw. entschlüsselt werden. Dann
erhält man neben einer weitgehend störungsfreien Übertragung die Möglichkeit einer Abhörsicherung.

Zeichnung

Ein Ausführungsbeispiel der Erfindung ist in der Zeichnung
anhand mehrerer Figuren dargestellt und in der nachfolgenden Beschreibung näher erläutert. Die Zeichnung zeigt in

Fig. 1
A ... D   je ein Frequenzschema der einzelnen Schritte des
          erfindungsgemäßen Verfahrens (Sendeseite),

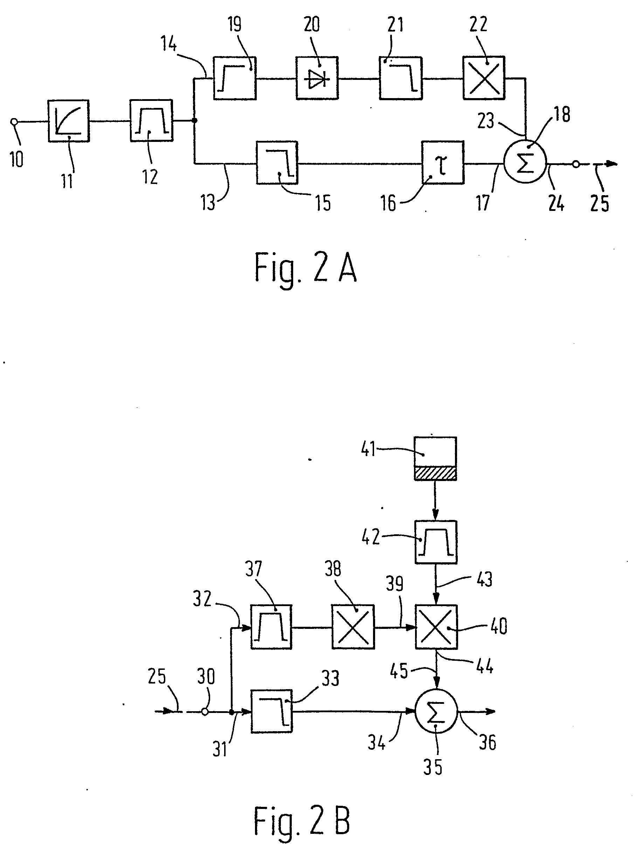

Fig. 2A   ein Blockschaltbild eines Senders für das erfindungsgemäße Verfahren und

Fig. 2B   ein Blockschaltbild eines Empfängers für das
          erfindungsgemäße Verfahren.

Beschreibung der Erfindung

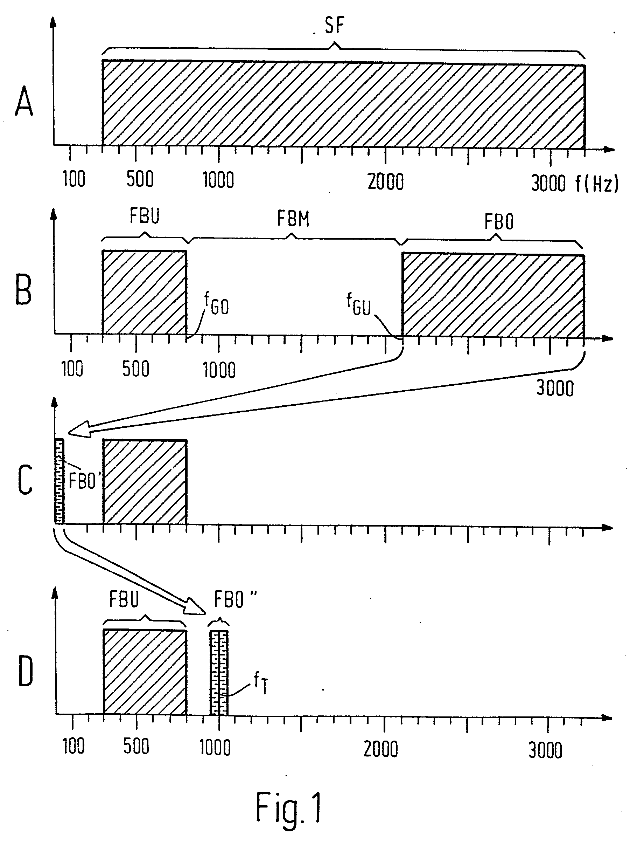

Das Frequenzschema gemäß Fig. 1A zeigt ein zu übertragendes
Sprachfrequenzband SF, das von etwa 300 Hz bis etwa 3200 Hz
reicht. Ein derartiges Frequenzband ist üblicherweise für
eine Sprachübertragung per Drahtleitung oder Funk vorgesehen.

Um zu einer verminderten Bandbreite für die Sprachübertragung zu kommen, ohne daß dadurch die Sprachverständlichkeit zu stark leidet, wird das Sprachfrequenzband auf der Sendeseite gemäß Fig. 1A in drei Frequenzbänder aufgeteilt (vgl. Fig. 1B), nämlich ein unteres Frequenzband FBU, ein mittleres Frequenzband FBM und ein oberes Frequenzband FBO. Das untere Frequenzband FBU reicht von etwa 300 Hz bis etwa 800 Hz und umfaßt demzufolge die für die Vokale der Sprache notwendigen Frequenzen. Das mittlere Frequenzband FBM reicht von etwa 800 Hz bis etwa 2100 Hz und umfaßt den unteren Teil der für die Konsonanten der Sprache charakteristischen Frequenzen. Das obere Frequenzband FBO reicht von etwa 2100 Hz bis etwa 3200 Hz und umfaßt den oberen Teil der für die Konsonanten der Sprache maßgebenden Frequenzen. Die Frequenzen des mittleren Frequenzbandes FBM, das fast die Hälfte des gesamten Sprachfrequenzbandes SF nach Fig. 1A ausmacht, werden von der weiteren Bearbeitung und Übertragung ausgeschlossen, so daß bereits dadurch eine erste Bandbreitenreduktion erhalten wird. Eine weitere Verminderung der Übertragungsbandbreite wird auf folgende Weise erzielt.

Von dem oberen Frequenzband FBO (Fig. 1B) wird nur der sich relativ langsam ändernde Amplitudenverlauf, das heißt ein Hüllkurvenfrequenzband FBO', extrahiert; vgl. Frequenzband FBO' in Fig. 1C. Durch eine Umsetzung des Hüllkurvenfrequenzbandes FBO' wird ein Frequenzband FBO" gebildet, das neben dem unteren Frequenzband FBU, vorzugsweise oberhalb des unteren Frequenzbandes, liegt; vgl. Fig. 1D. Die Umsetzung erfolgt durch Modulation eines Trägers $f_T$ von zum Beispiel 1000 Hz mit dem Frequenzband FBO'.

Wie in Fig. 1D deutlich zu sehen ist, wird für die Sprachübertragung nur ein Frequenzband von etwa 300 Hz bis etwa 1050 Hz benötigt, das heißt nur etwa ein Drittel des Sprachfrequenzbandes SF gemäß Fig. 1A.

Empfangsseitig wird das Hüllkurvenfrequenzband FBO" demoduliert und das Demodulationssignal als Modulation für ein
Rauschsignal verwendet, das nur Frequenzen des oberen
Frequenzbandes FBO aufweist. Das durch die Modulation erhaltene Signal entspricht dann weitgehend dem sendeseitigen
oberen Frequenzband FBO (Fig. 1B). Wird zu diesem Signal das
empfangene untere Frequenzband FBU summiert, dann erhält man
wieder das in Fig. 1B gezeigte Frequenzschema.

Ein Sender für das erfindungsgemäße Verfahren hat vorzugsweise den in Fig. 2A gezeigten Aufbau.

Der Sender weist einen Eingang 10 auf, an den sich eine Kompressionsschaltung 11 anschließt, auf die ein Bandpaß 12
folgt. An den Ausgang des Bandpasses schließen sich zwei
parallele Wege 13, 14 an, wobei in dem Weg 13 eine erste
Reihenschaltung aus einem ersten Tiefpaßfilter 15 und einem
Laufzeitkorrekturglied 16 liegt, das mit einem ersten Eingang 17 einer Summierschaltung 18 verbunden ist. Der zweite
Weg 14 enthält eine Reihenschaltung aus einem Hochpaßfilter 19,
einem Hüllkurvendetektor 20, einem zweiten Tiefpaßfilter 21
und einem Umsetzer 22. Der Ausgang des Umsetzers ist mit einem
zweiten Eingang 23 der Summierschaltung 18 verbunden.

Die Wirkungsweise des vorstehend beschriebenen Senders nach
Fig. 2A ist folgende.

Das an dem Eingang 10 liegende Sprachfrequenzband SF (Fig. 1A)
wird durch die Kompressionsschaltung 11 in seiner Dynamik komprimiert. Der Bandpaß 12 sorgt dafür, daß nur Frequenzen des
zu übertragenden Sprachfrequenzbandes SF weitergeleitet werden.
Das erste Tiefpaßfilter 15 in dem ersten Weg 13 ist so bemessen,
daß es im wesentlichen nur Frequenzen unterhalb der oberen
Grenzfrequenz $f_{GO}$ des unteren Frequenzbandes FBU durchläßt. Mit
dem Laufzeitkorrekturglied 16 wird eine Korrektur vorgenommen,
die auf die Laufzeit des im zweiten Weg 14 liegenden zweiten Tiefpaßfilters 21 zurückgeht. An dem ersten Eingang 17 der Summierschaltung 18 liegt somit das laufzeitkorrigierte untere Frequenzband FBU, das die Vokale der Sprache wiedergibt.

Das Hochpaßfilter 19 im zweiten Weg 14 ist derart dimensioniert, daß es nur die Frequenzen oberhalb der unteren Grenzfrequenz $f_{GU}$ des oberen Frequenzbandes FBO durchläßt. Mit dem Hüllkurvendetektor 20 wird die Hüllkurve des oberen Frequenzbandes FBO abgetastet. Das Hüllkurvenfrequenzband FBO' wird durch das zweite Tiefpaßfilter 21 in der Höhe begrenzt. In dem Ausführungsbeispiel hat das zweite Tiefpaßfilter 21 eine Grenzfrequenz von etwa 50 Hz. Der Umsetzer 22 bewirkt eine Umsetzung des Hüllkurvenfrequenzbandes FBO' (Fig. 1C) in einen Frequenzbereich neben dem unteren Frequenzband FBO; vgl. Hüllkurvenfrequenzband FBO" in Fig. 1D. In dem Ausführungsbeispiel erfolgt das Umsetzen des Hüllkurvenfrequenzbandes FBO' durch Modulation eines Trägers $f_T$ von etwa 1000 Hz.

An einem Ausgang 24 der Summierschaltung 18 bzw. des Senders liegen dann die in Fig. 1D gezeigten Frequenzbänder FBU und FBO", die zusammen ein erheblich geringeres Frequenzband beanspruchen als das ursprüngliche Sprachfrequenzband SF.

An den Ausgang 24 schließt sich eine Übertragungsstrecke 25 an (vgl. gestrichelte Linie in Fig. 2A), das ist zum Beispiel eine Drahtleitung. Die Übertragungsstrecke kann jedoch auch mit Vorteil eine Funkstrecke sein, wozu die dem Fachmann geläufigen Maßnahmen zu ergreifen sind.

Aufbau und Wirkungsweise des Empfängers (Fig. 2B) sind folgendermaßen:

Die Übertragungsstrecke 25 endet an einem Eingang 30 des Empfängers. An den Eingang schließen sich zwei Wege 31, 32 an, von denen der erste Weg 31 über ein drittes Tiefpaßfilter 33 mit einem ersten Eingang 34 einer Summierschaltung 35 in Verbindung steht, deren Ausgang mit 36 bezeichnet ist.

In dem zweiten Weg 32 liegt eine Reihenschaltung aus einem Bandpaß 37 und einem Demodulator 38, der mit einem ersten Eingang 39 eines Amplitudenmodulators 40 verbunden ist. Ein Rauschsignalgenerator 41 steht über einen weiteren Bandpaß 42 mit einem zweiten Eingang 43 des Amplitudenmodulators 40 in Verbindung, dessen Ausgang 44 mit einem zweiten Eingang 45 der Summierschaltung 35 verbunden ist.

Von den am Eingang 30 des Empfängers liegenden Frequenzen (Fig. 1D) filtert das dritte Tiefpaßfilter 33, dessen Grenzfrequenz der oberen Grenzfrequenz $f_{GO}$ des unteren Frequenzbandes FBU entspricht, das untere Frequenzband FBU aus und leitet es an den ersten Eingang 34 der Summierschaltung 35 weiter.

Die obere und untere Grenzfrequenz des Bandpasses 37 sind derart bemessen, daß das Hüllkurvenfrequenzband FBO" aus dem am Eingang 30 liegenden Signal ausgefiltert wird. Durch eine anschließende Demodulation mit dem Demodulator 38 wird das Hüllkurvenfrequenzband FBO' (Fig. 1C) zurückgewonnen. Das Hüllkurvenfrequenzband FBO' moduliert nun in dem Amplitudenmodulator 40 ein von dem Rauschsignalgenerator 41 abgegebenes, nur die Frequenzen des oberen Frequenzbereiches FBO (Fig. 1B) umfassendes und mit dem weiteren Bandpaß 42 ausgefiltertes Rauschsignal. Die Grenzfrequenzen des weiteren Bandpasses 42 entsprechen der unteren Grenzfrequenz $f_{GU}$ und der oberen Grenzfrequenz des oberen Frequenzbandes FBO. Durch die Modulation erhält man ein dem sendeseitigen oberen Frequenzband FBO annähernd entsprechendes Frequenzband, das zu dem unteren Frequenzband FBU hinzugefügt wird. An dem Ausgang 36 erscheinen somit Frequenzen, die dem Frequenzschema gemäß Fig. 1B entsprechen.

Sendeseitig können die zu übertragenden Signale (Fig. 1D) vor
der Aussendung in digitale Signale umgewandelt und empfangsseitig in analoge Signale zurückgewandelt werden.

Mit Vorteil können die digitalen Signale auf der Sendeseite
kodiert oder gegebenenfalls auch verschlüsselt und empfangsseitig dekodiert bzw. entschlüsselt werden. Die hierzu notwendigen Maßnahmen sind dem Fachmann bekannt.

30/82
EK/PLI Scht/Li
27.9.1982


ROBERT BOSCH GMBH, 7000 Stuttgart 1


Ansprüche


1. Verfahren und Schaltungsanordnung zur bandbreitenreduzierten Sprachübertragung mit sendeseitiger
Aufteilung des Sprachfrequenzbandes in ein unteres
Frequenzband und ein oberes Frequenzband und
empfangsseitiger Summierung der Frequenzbänder,
dadurch gekennzeichnet, daß sendeseitig die Aufteilung des Sprachfrequenzbandes (SF) derart erfolgt,
daß zwischen dem oberen Frequenzband (FBO) und dem
unteren Frequenzband (FBU) ein mittleres Frequenzband (FBM) vorhanden ist, welches nicht an der Übertragung teilnimmt, daß das Hüllkurvenfrequenzband
(FBO') des oberen Frequenzbandes abgetastet und
neben das untere Frequenzband umgesetzt wird,
daß empfangsseitig das umgesetzte Hüllkurvenfrequenzband (FBO") demoduliert und mit dem demodulierten Band (FBO') ein bandbegrenztes Rauschsignalspektrum moduliert wird und daß das modulierte
Rauschsignal zu dem unteren Frequenzband summiert
wird.


2. Verfahren nach Anspruch 1, dadurch gekennzeichnet,
daß sendeseitig das untere Frequenzband (FBU) und
das umgesetzte Hüllkurvenfrequenzband (FBO") von der
analogen Form in eine digitale Form und empfangsseitig von der digitalen in die analoge Form umgewandelt werden.


- 2 -

0104313

30/82 — 2 —

3. Verfahren nach Anspruch 2, dadurch gekennzeichnet, daß die digitalen Signale sendeseitig kodiert und empfangsseitig dekodiert werden.

4. Verfahren nach Anspruch 2, dadurch gekennzeichnet, daß die digitalen Signale sendeseitig verschlüsselt und empfangsseitig entschlüsselt werden.

5. Verfahren nach Anspruch 1 oder einem der folgenden, dadurch gekennzeichnet, daß in dem mittleren Frequenzbereich (FBM) Daten übertragen werden.

6. Verfahren nach Anspruch 1, dadurch gekennzeichnet, daß das Rauschsignalspektrum nur Frequenzen des oberen Frequenzbereiches (FBO) umfaßt.

7. Schaltungsanordnung zur Durchführung des Verfahrens nach Anspruch 1, dadurch gekennzeichnet, daß der Eingang (10) des Empfängers (Fig. 2A) mit einem Bandpaß (12) verbunden ist, welches erstens über ein erstes Tiefpaßfilter (15) und ein Laufzeitkorrekturglied (16) mit einem ersten Eingang (17) einer Summierschaltung (13) und zweitens über ein Hochpaßfilter (19), einen Hüllkurvendetektor (20), ein zweites Tiefpaßfilter (21) und einen Umsetzer (22) mit einem zweiten Eingang (23) der Summierschaltung verbunden ist, deren Ausgang (24) den Ausgang des Senders bildet.

8. Schaltungsanordnung nach Anspruch 7, dadurch gekennzeichnet, daß zwischen dem Eingang (10) des Empfängers und dem Bandpaß (12) eine Kompressionsschaltung (11) vorgesehen ist.

9. Schaltungsanordnung zur Durchführung des Verfahrens nach Anspruch 1, dadurch gekennzeichnet, daß der Eingang (30) des Senders mit einem dritten Tiefpaßfilter (33) sowie mit

— 3 —

30/82        - 3 -

einem Bandpaß (37) verbunden ist, daß der Ausgang
des dritten Tiefpaßfilters mit einem ersten Eingang (34)
einer Summierschaltung (35) verbunden ist, daß der
Bandpaß (37) über einen Demodulator (38) mit einem
ersten Eingang (39) eines Amplitudenmodulators (40)
verbunden ist, dessen zweiter Eingang (43) über einen
weiteren Bandpaß (42) mit dem Ausgang eines Rauschsignalgenerators (41) und dessen Ausgang (44) mit einem zweiten
Eingang (45) der Summierschaltung (35) verbunden ist,
und daß die Summierschaltung einen Ausgang (36) aufweist.

Fig.1

Fig. 2 A

Fig. 2 B

Europäisches
Patentamt

**EUROPÄISCHER RECHERCHENBERICHT**

0104313

Nummer der Anmeldung

EP 83 10 4632

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 170 719 (O.FUJIMURA) <br><br> *Spalte 2, Zeilen 17-49; Abbildungen 1,2* | 1-3,7, 9 | G 10 L 1/06 |
| X | ELECTRICAL COMMUNICATION, Band 52, Nr. 3, 1977, Seiten 219-222, London (GB); W.AUTH: "Picor system: An economical version of the baseband vocoder". *Seiten 219,220: "Picor System", "Baseband Vocoder"; Abbildungen 1-3* | 1,6,7, 9 | |
| X | FR-A-2 173 328 (INTERNATIONAL STANDARD ELECTRIC CORPORATION) *Seite 11, Zeile 34 - Seite 12, Zeile 5; Seite 14, Zeilen 10-33; Abbildungen 5a,5b* | 1,6,7, 9 | |
| X | DE-C- 935 914 (W.MEYER-EPPLER et al.) *Anspruch 1; Abbildung* | 1 | **RECHERCHIERTE SACHGEBIETE (Int. Cl. ³)** <br><br> G 10 L 1/06 |
| A | US-A-2 817 711 (C.B.H.FELDMAN) <br><br> *Abbildungen 1,2* | 1,5,7, 9 | |
| A | US-A-3 246 084 (K.D.KRYTER) *Anspruch 1* | 1 | |
| | --- -/- | | |

Der vorliegende Recherchenbericht wurde für alle Patentansprüche erstellt.

| Recherchenort DEN HAAG | Abschlußdatum der Recherche 29-11-1983 | Prüfer ARMSPACH J.F.A.M. |
|---|---|---|

0104313

**Europäisches Patentamt**

# EUROPÄISCHER RECHERCHENBERICHT

Nummer der Anmeldung

EP 83 10 4632

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | THE JOURNAL OF THE ACOUSTICAL SOCIETY OF AMERICA, Band 32, Nr. 5, Mai 1960, Seiten 547-556, New York (USA); K.D.KRYTER: "Speech bandwidth compression through spectrum selection". *Seiten 550,551: "Two 500-cps pass bands"* | 1 | |
| A | US-A-3 684 838 (L.R.KAHN) *Anspruch 1* | 1,5 | |
| A | DE-B-1 062 286 (TELEFUNKEN) *Ansprüche 1,2* | 4 | |
| A | FR-A-1 506 261 (I.B.M.CORPORATION) *Abbildung 1* | 8 | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 29-11-1983 | ARMSPACH J.F.A.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82